# FASCICULE DE BREVET EUROPEEN

(11) **EP 2 414 144 B1**
(45) Date de publication et mention de la délivrance du brevet: **16.10.2013**
(21) Numéro de dépôt: 10715991.5
(22) Date de dépôt: 29.03.2010
(51) Int. Cl.: B29C 45/14, B29C 45/16

(54) **PROCÉDÉ DE MOULAGE D'UNE PIÈCE EN MATIÈRE PLASTIQUE AVEC UNE PIÈCE RAPPORTÉE MÉTALLIQUE MAINTENUE PAR AIMANTATION, DISPOSITIF DE MOULAGE ET UTILISATION D'UN AIMANT POUR LA FIXATION DE LADITE PIÈCE RAPPORTÉE**
VERFAHREN UND VORRICHTUNG ZUM UMSPRITZEN VON METALLEINLEGETEILEN, DIE IM WERKZEUG DURCH SCHWENKBARE MAGNETEN FIXIERT WERDEN
PROCESS AND DIVISE FOR INSERT MOULDING A METAL PIECE, FIXED IN THE MOULD VIA A MOVABLE MAGNET

(30) Priorité: 30.03.2009 FR 0951953
(43) Date de publication de la demande: 08.02.2012
(73) Titulaire: Saint-Gobain Glass France, 92400 Courbevoie (FR)
(72) Inventeur: DEPIERRE, Emmanuel, F-60310 Thiescourt (FR); DEBAILLEUL, Romain, F-60150 Villers-sur-Coudun (FR); ROZE, Jean-Pierre, F-60290 Cauffry (FR)
(74) Mandataire: Jamet, Vincent
(86) Numéro de dépôt international: PCT/FR2010/050570
(87) Numéro de publication internationale: WO 2010/112745

(56) Documents cités:
- EP-A- 1 033 223
- EP-A- 1 588 821
- WO-A-2007/018042
- CH-A- 335 222
- DE-A1- 2 340 811
- DE-A1- 3 116 339
- GB-A- 2 045 149
- JP-A- 2002 103 348
- US-A- 3 121 193
- US-A- 5 266 914
- US-A- 6 090 322

## Description

La présente invention se rapporte au domaine du moulage de pièces pour la réalisation de vitrage.

La présente invention se rapporte plus particulièrement à la réalisation de cordons profilés sur des vitrages par moulage ou à la réalisation de vitrages en matière plastique (par exemple en polycarbonate).

Elle concerne plus particulièrement un procédé de moulage d'un cordon profilé en particulier à la périphérie d'un vitrage ou de moulage d'un vitrage en matière plastique, dans lequel une matière plastique constitutive dudit cordon profilé ou respectivement dudit vitrage en matière plastique est introduite dans une cavité de moulage dans laquelle au moins une pièce rapportée ferromagnétique, telle qu'un enjoliveur, a préalablement été positionnée.

L'art antérieur connaît de la demande internationale de brevet N° WO 2007/018042 un système de fixation d'une pièce rapportée métallique utilisant un électro-aimant pour la retenue de la pièce rapportée lors de la fermeture du moule et lors du moulage.

Ce système est onéreux à fabriquer et à utiliser car il nécessite un pilotage de l'alimentation électrique de l'électro-aimant.

Le but de l'invention est de pallier les inconvénients de l'art antérieur en proposant un système de retenue d'une pièce rapportée métallique lors du moulage d'un cordon profilé qui est simple, peu onéreux à fabriquer et peu onéreux à utiliser.

Un autre but de l'invention est de permettre de retenir la pièce rapportée à travers la paroi de la cavité de moulage, sans avoir à ménager de zone particulière et sans devoir utiliser de joint en surface de la cavité de moulage.

La présente invention se rapporte ainsi dans son acception la plus large à un procédé de moulage d'un cordon profilé en particulier à la périphérie d'un vitrage ou de moulage d'un vitrage en matière plastique, selon la revendication 1. Selon ce procédé, une matière plastique constitutive dudit cordon profilé ou respectivement dudit vitrage en matière plastique est introduite dans une cavité de moulage dans laquelle au moins une pièce rapportée ferromagnétique, telle qu'un enjoliveur, a préalablement été positionnée, et ladite pièce rapportée est maintenue dans ladite cavité de moulage pendant l'introduction de ladite matière plastique par au moins un aimant qui est mobile entre deux positions, une position active A dans laquelle il exerce une force d'attraction sur ladite pièce rapportée à travers la surface interne de la cavité de moulage et une position inactive I dans laquelle il n'exerce pas de force d'attraction sur ladite pièce rapportée.

Au sens de la présente invention, on entend comme habituellement par « ferromagnétique », la propriété qu'ont certains éléments de s'aimanter fortement sous l'effet d'un champ magnétique extérieur (éléments à base de fer, cobalt, nickel et un grand nombre de leurs alliages, en particulier les aciers), par opposition aux éléments dits « paramagnétiques » (éléments à base d'aluminium, chrome, platine, ...) qui subissent certes des actions de même nature que le fer mais beaucoup moins intenses, étant rappelé par ailleurs qu'un aimant est un corps ferromagnétique qui garde une aimantation importante même après la disparition du champ extérieur (aimantation rémanente).

De préférence, l'aimant (ou les aimants) est (ou sont) mobile(s) entre les deux positions active A et inactive I par un mouvement de rotation R et/ou de translation T.

Dans une variante de l'invention, plusieurs aimants sont mobiles ensembles selon un mouvement unique.

Dans cette variante de l'invention, ledit ensemble d'aimants est, de préférence, divisé en deux groupes d'aimants de manière à ce que lorsque un groupe est en position inactive I dans laquelle il n'exerce pas de force d'attraction sur ladite pièce rapportée l'autre groupe exerce une force de répulsion sur ladite pièce rapportée.

Dans cette variante de l'invention en particulier, ladite pièce rapportée peut être positionnée dans la cavité de moulage, à cheval sur une barrette paramagnétique.

Pour la mise en oeuvre du procédé selon l'invention, l'aimant (ou les aimants) est (ou sont), de préférence :
- positionné(s) en position active A avant le début de l'injection de la matière plastique constitutive dudit cordon profilé ou respectivement dudit vitrage en matière plastique et
- l'aimant (ou les aimants) est (ou sont), de préférence, positionné(s) en position inactive I après la fin de l'injection de la matière plastique constitutive dudit cordon profilé ou respectivement dudit vitrage en matière plastique.

De plus, l'aimant (ou les aimants) est (ou sont), de préférence, positionné(s) en position active A après le positionnement de ladite pièce rapportée dans la cavité de moulage.

En outre, l'aimant (ou les aimants) est (ou sont), de préférence, positionné(s) en position inactive I avant le retrait du vitrage du moule.

La présente invention se rapporte également à un dispositif de moulage pour la mise en oeuvre du procédé de moulage selon l'invention, ce dispositif comportant une cavité de moulage comporte en deçà de sa surface interne de moulage au moins un aimant qui est mobile entre deux positions, une position active A dans laquelle il exerce une force d'attraction à travers la surface interne de la cavité de moulage sur ladite pièce rapportée et une position inactive I dans laquelle il n'exerce pas de force d'attraction sur ladite pièce rapportée.

En outre, de préférence, le(s)dit(s) aimant(s) est (ou sont) positionné(s) sur au moins un tiroir mobile en translation T et/ou sur au moins un disque mobile en rotation R.

La présente invention se rapporte également à l'utilisation d'au moins un aimant mobile pour la mise en oeuvre du procédé de moulage selon l'invention.

Avantageusement, l'invention permet de réaliser un maintien fiable par attraction magnétique de la pièce rapportée ferromagnétique pendant le moulage à l'aide d'éléments simples et peu onéreux à fabriquer et à utiliser.

Avantageusement également, l'invention permet de faciliter le démoulage de l'ensemble qui incorpore la pièce rapportée par répulsion magnétique de la pièce rapportée ferromagnétique après le moulage.

Cette répulsion magnétique pourrait être opérée par mouvement d'un aimant sur lui-même mais dans le contexte de l'invention il est préféré d'utiliser une pluralité d'aimants divisé en deux groupes de telle sorte que lorsqu'un groupe d'au moins un aimant n'est pas en position active dans laquelle il(s) exerce(nt) une force d'attraction sur ladite pièce rapportée, alors l'autre groupe d'au moins un aimant exerce une force de répulsion sur ladite pièce rapportée.

Avantageusement en outre, cette force magnétique d'attraction ou ces forces magnétiques d'attraction/répulsion s'exerce(nt) à travers la surface interne de la cavité de moulage. Ainsi, il n'y a aucun élément mobile permettant la mobilité de (ou des) aimant(s) qui soit en surface de la cavité de moulage. De ce fait, l'entretien du moule est aisé car il n'y a aucun joint dans cette zone de maintien de la pièce rapportée.

Avantageusement encore, il n'y a pas de contact direct entre l'aimant (ou les aimants) et la pièce rapportée, ce qui permet d'éviter la formation de marque en surface de la pièce rapportée, ainsi que la déformation de la pièce rapportée.

Avantageusement enfin, il n'y a pas de matériel périphérique complexe (du type générateur électrique pour électro-aimant) et il n'y a pas de problème de dilatation différentielle (due par exemple à la chauffe d'un électro-aimant), puisqu'il n'y a pas d'électro-aimant.

La présente invention sera mieux comprise à la lecture de la description détaillée ci-après d'exemples de réalisation non limitatifs et des figures ci-jointes :
- La figure 1 illustre une vue en perspective d'un vitrage de véhicule présentant un profilé enjoliveur fixé au cordon profilé lors du moulage de ce dernier, le profilé enjoliveur et le cordon profilé étant illustré en coupe en partie basse du vitrage ;
- La figure 2 illustre une vue en coupe d'une cavité de moulage d'une première variante de réalisation de l'invention en position pièce rapportée non maintenue ;
- La figure 3 illustre une vue en coupe de cavité de moulage de la figure 2 en position pièce rapportée maintenue ;
- La figure 4 illustre une vue en coupe d'une cavité de moulage d'une seconde variante de réalisation de l'invention en position pièce rapportée non maintenue ;
- La figure 5 illustre une vue de dessus des aimants de la figure 4 ;
- La figure 6 illustre une vue en coupe de la cavité de moulage de la figure 4 en position pièce rapportée maintenue ; et
- La figure 7 illustre une vue de dessus des aimants de la figure 6.

Dans ces figures, les proportions entre les différents éléments ne sont pas respectées et les éléments en arrière plan ne sont en général pas représentés, afin de faciliter leur lecture.

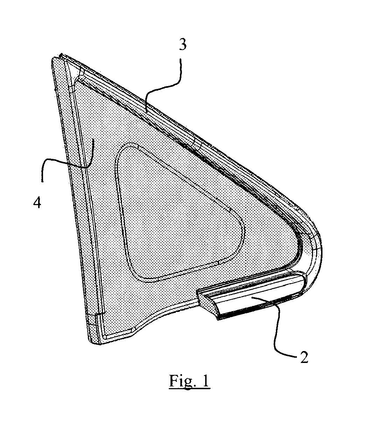

La figure 1 illustre un vitrage 4 fixe d'un véhicule automobile sur la périphérie duquel est réalisé un cordon profilé 3 en un matériau polymère souple.

Le matériau polymère constitutif du cordon profilé 3 peut être un thermoplastique (PVC, TPE, ...), un polyuréthanne ou encore un caoutchouc synthétique du type EPDM ou toute autre matière adéquate.

Le cordon profilé 3 a été fabriqué par mise en oeuvre d'un procédé de fabrication appelé « encapsulation » car il comporte une étape de moulage du cordon profilé 3 dans un dispositif de moulage, entre deux éléments de moulage, un élément de moulage accueillant la face intérieure du vitrage et un élément de moulage accueillant la face extérieure du vitrage, ces deux éléments de moulage étant refermés l'un sur l'autre pendant l'étape de moulage.

Sur la figure 1, le cordon profilé 3 est disposé sur toute la périphérie du vitrage 4 mais ce cordon profilé pourrait tout à fait n'être positionné que sur une partie de la périphérie du vitrage ou sur une partie quelconque du vitrage.

Pour améliorer l'aspect esthétique du vitrage, une partie du cordon profilé 3 visible de l'extérieur du véhicule est masquée par une pièce rapportée 2 constituée ici d'un profilé enjoliveur et qui est ici disposé seulement en partie basse du vitrage, mais qui pourrait également être disposé sur toute la périphérie du vitrage 4 et/ou sur une partie quelconque du vitrage.

La pièce rapportée est préfabriquée : elle a été mise en forme préalablement à son introduction dans le moule d'injection dans lequel le cordon profilé 3 a été formé. Elle peut être en acier inoxydable magnétisable comme par exemple la nuance d'acier S430 disponible auprès de la société Arcelor Mittal.

Le vitrage 4 peut être un vitrage monolithique, c'est-à-dire constitué d'une feuille de matière unique, ou être un vitrage composite, c'est-à-dire constitué de plusieurs feuilles de matière entre lesquelles est insérée au moins une couche de matière adhérente dans le cas des vitrages feuilletés, ou au moins un espace intercalaire dans le cas des vitrages multiples (doubles vitrages, triples vitrages, ...). La (ou les) feuille(s) de matière peut (ou peuvent) être minérale(s), notamment en verre, ou organique(s), notamment en matière plastique.

Dans le cas d'un vitrage pour véhicule, le vitrage présente généralement au moins partiellement à sa périphérie une bande d'ornementation, non illustrée ici. Cette bande d'ornementation résulte en général d'un dépôt d'émail, réalisé sur la face intérieure du vitrage ou sur une face intercalaire du vitrage pour les vitrages composites, mais elle peut également résulter d'une coloration partielle et/ou périphérique d'une feuille de matière utilisée, notamment d'une feuille en matière organique.

Pour fabriquer le cordon profilé 3 par moulage, le vitrage 4 est positionné dans une partie de moule, ici la partie de moule inférieure 50, puis une partie de moule supérieure 50' est refermée sur la partie de moule inférieure, afin de former dans l'espace fermé entre ces deux parties de moule une cavité de moulage 5.

Le système de moulage utilisé ici est à presse verticale, mais il est tout à fait possible de l'adapter à une presse horizontale.

Le pourtour de cette cavité de moulage 5 est définie d'une part par la face intérieure 51 de la partie de moule inférieure 50 et d'autre part par la face intérieure 51' de la partie de moule supérieure 50'. Le bord du vitrage 4 pénètre dans la cavité de moulage pour pouvoir mouler le cordon profilé 3 à la périphérie du vitrage 4.

La matière plastique constitutive du cordon profilé 3 est injectée dans la cavité de moulage par l'intermédiaire d'un orifice d'injection 6.

Avant que le moule ne soit fermé et que l'injection de la matière plastique constitutive du cordon profilé 3 ne commence, une pièce rapportée 2, telle qu'un enjoliveur est introduite dans la partie de moule inférieure 50 et plus précisément dans un creux 52 qui présente une forme similaire en négatif de la forme de la pièce rapportée.

La partie de moule supérieure 50' comporte, de préférence, sur sa face intérieure 51' une broche 7 pour le maintien provisoire de la pièce rapportée 2. Ainsi, lors de la fermeture de la partie de moule supérieure 50' sur la partie de moule inférieure 50 la broche 7 va maintenir provisoirement la pièce rapportée 2 en position dans le creux 52.

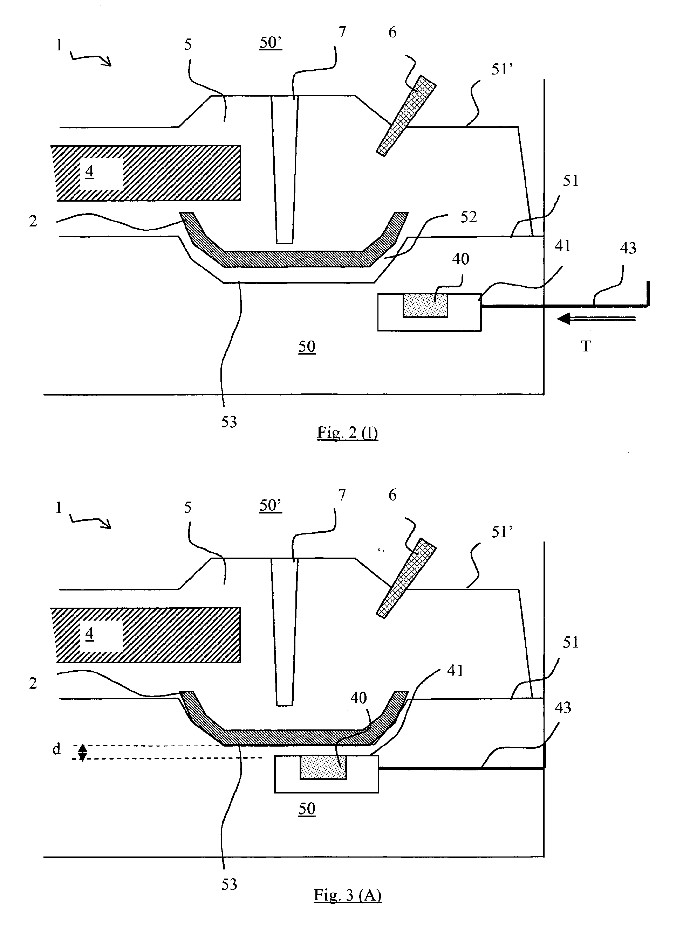

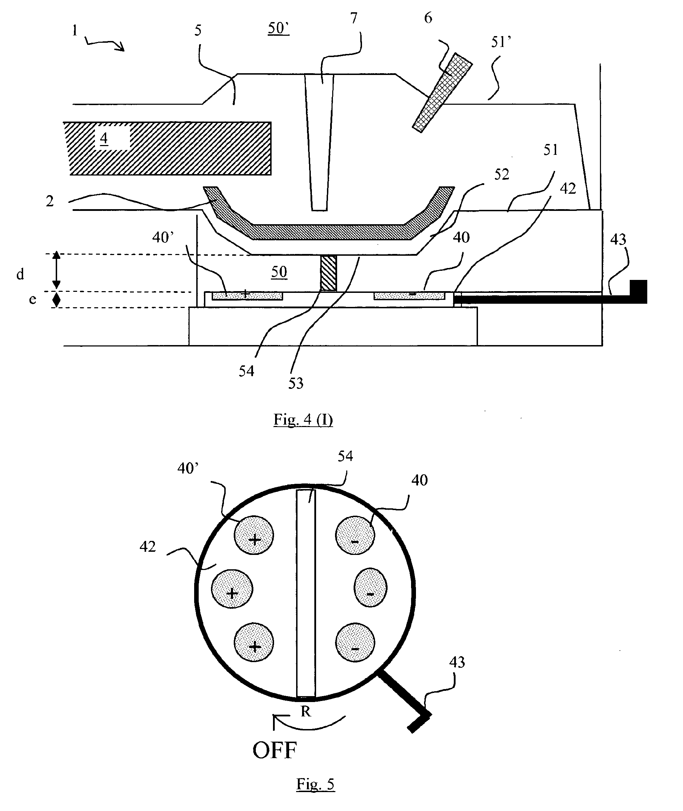

Dans la première variante illustrée en figures 2 et 3, l'actionnement du système de maintien par aimantation est opéré par translation d'un tiroir 41 comportant un aimant 40 unique alors que dans la seconde variante illustrée en figures 4 à 7, l'actionnement du système de maintien par aimantation est opéré par rotation d'un disque 42 sur lui-même, ce disque comportant ici plusieurs aimants 40, 40' ; toutefois, le disque pourrait ne comporter qu'un seul aimant.

Par ailleurs, la première variante de l'invention permet d'illustrer la mise en oeuvre de l'invention avec attraction magnétique simple alors que la seconde variante de l'invention permet d'illustrer la mise en oeuvre de l'invention avec attraction/répulsion magnétiques, comme expliqué ci-après.

Selon l'invention, pour réaliser une attraction simple sur la pièce rapportée 2 dans ladite cavité de moulage 5 pendant l'introduction de ladite matière plastique dans la cavité de moulage au moins un aimant 40 est utilisé. Cet aimant est mobile entre deux positions : une position active A (figure 3) dans laquelle il exerce une force d'attraction sur ladite pièce rapportée 2 à travers la surface interne de la cavité de moulage et une position inactive I (figure 2) dans laquelle il n'exerce pas de force d'attraction sur ladite pièce rapportée 2.

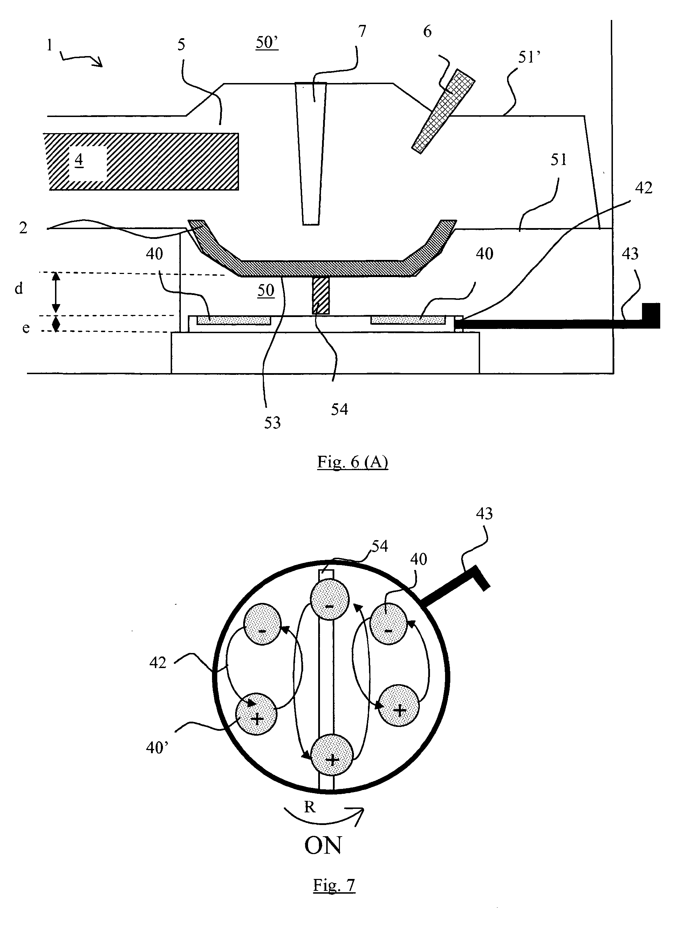

Pour réaliser une attraction/répulsion sur la pièce rapportée 2, au moins deux aimants 40, 40' sont positionnés avec leurs pôles tête bêche, de manière à ce que dans la position active (figure 6) du système de maintien par aimantation au moins un aimant 40, 40' exerce une force d'attraction à travers la surface interne de la cavité de moulage sur ladite pièce rapportée 2 et que dans la position inactive (figure 4) du système de maintien par aimantation l'autre aimant (respectivement 40', 40) exerce une force de répulsion à travers la surface interne de la cavité de moulage sur ladite pièce rapportée 2.

Pour que la force d'attraction, voire éventuellement la force de répulsion, s'opère(nt) correctement à travers la surface interne de la cavité de moulage il peut être préférable que la matière constitutive du moule, au moins dans cette zone où est positionné la pièce rapportée 2, ne soit pas ferromagnétique et soit ainsi paramagnétique ; cette matière peut être par exemple l'aluminium ou un alliage d'aluminium.

La figure 2 illustre le moment où, pour la première variante, le moule est complètement refermé et où le système de maintien par aimantation selon l'invention va être actionné. Sur cette figure 2, l'enjoliveur est illustré à distance du fond 53 du creux 52 afin de bien montrer que le système de maintien par aimantation n'est pas encore activé. Dans la pratique, sous l'effet de la gravité, l'enjoliveur reposerait dans le fond 53 du creux 52.

On peut voir sur cette figure 2 que le tiroir 41 sur lequel est positionné l'aimant 40 est en position ouverte : la poignée 43 du tiroir 41 fait saillie au-delà de la partie de moule inférieure 50 et l'aimant 40 n'est pas positionné sous le creux 52.

En figure 3, l'enjoliveur est illustré plaqué contre le fond 53 du creux 52 afin de bien montrer que l'aimant 40 qui a été déplacé par translation de la droite vers la gauche selon la flèche T de la figure 2 en poussant sur la poignée 43 et qui se trouve maintenant sous le creux 52 attire l'enjoliveur sous l'effet de sa force magnétique d'attraction.

Dans cette position active, l'aimant se trouve à une distance d d'environ 2 à 10 mm du fond 53.

Une fois le tiroir fermé, l'injection de la matière par l'orifice d'injection 6 peut alors commencer.

La figure 4 illustre le moment où, pour la seconde variante, le moule est complètement refermé et où le système de maintien par aimantation selon l'invention va être actionné. Sur cette figure 4, comme en figure 2, l'enjoliveur est illustré à distance du fond 53 du creux 52 afin de bien montrer que le système de maintien par aimantation n'est pas encore activé.

On peut voir sur cette figure 4 que deux aimants 40, 40' sont positionnés à une distance d d'environ 2 à 10 mm du fond 53, sur le disque 42 qui est mobile en rotation sur lui-même selon son axe central orienté verticalement sur la figure 4 par mouvement d'environ un tiers de tour de la poignée 43 accessible depuis l'extérieur de la partie de moule inférieure 50.

Ces deux aimants sont séparés par une barrette 54 paramagnétique en bronze fixée dans la paroi interne de la cavité de moulage, d'une hauteur sensiblement égale à la distance d.

L'épaisseur e du disque 42 est de l'ordre de 2 à 5 mm.

La figure 5 illustre une vue de dessus du disque 42 de la figure 4, avec en outre la barrette 54 disposée au-dessus.

Comme on peut le constater, la barrette 54 s'oppose à la création de champs magnétiques entre les aimants 40 dont le pole négatif est orienté vers le haut (vers l'enjoliveur) et les aimants 40' dont le pole positif est orienté vers le haut : il n'y a donc pas de force d'attraction notable exercée sur l'enjoliveur.

En figure 6, l'enjoliveur est illustré plaqué contre le fond 53 du creux 52 afin de bien montrer que le disque 42, qui a été déplacé par rotation sur son axe central selon la flèche R de la figure 7 en poussant sur la poignée 43, engendre maintenant une force d'attraction sur l'enjoliveur sous l'effet de la force magnétique d'attraction des aimants.

Comme on peut le constater sur cette figure 7 (qui est une vue de dessus du disque 42 de la figure 6, avec en outre la barrette 54 disposée au-dessus), la barrette 54 ne s'oppose plus à la création de champs magnétiques entre les aimants 40 dont le pole négatif est orienté vers le haut (vers l'enjoliveur) et les aimants 40' dont le pole positif est orienté vers le haut : il n'y a donc une force d'attraction notable exercée sur l'enjoliveur et principalement orienté dans le sens longitudinal de l'enjoliveur.

Dans cette position, l'injection de la matière par l'orifice d'injection 6 peut alors commencer.

Dans une version de l'invention non illustrée ici, il est possible de positionner une pluralité d'aimants sur un tiroir, de manière à ce que l'ensemble d'aimants soit divisé en deux groupes d'aimants et que lorsque un groupe est en position inactive I dans laquelle il n'exerce pas de force d'attraction sur ladite pièce rapportée l'autre groupe exerce une force de répulsion sur ladite pièce rapportée.

Dans la première variante de l'invention, il n'y a aucun aménagement particulier dans la zone de la surface interne de la cavité de moulage qui accueille la pièce rapportée autre que la réalisation du creux 52 (qui est d'ailleurs facultatif) ; Dans la seconde variante de l'invention, il n'y a aucun aménagement particulier dans la zone de la surface interne de la cavité de moulage autre que d'une part la réalisation du creux 52 (qui est d'ailleurs facultatif) et d'autre part le positionnement de la barrette 54 (qui n'est utile que pour la séparation des champs magnétiques des aimants du disque). Pour la mise en oeuvre de l'invention, il n'y a donc aucun joint ou aucun élément d'étanchéité dans la zone de la surface interne de la cavité de moulage qui accueille la pièce rapportée.

Selon l'invention, l'attraction magnétique qui s'opère en position active est telle que la matière injectée par l'orifice d'injection ne peut pas se glisser entre la pièce rapportée 2 et le fond 53 de la cavité de moulage. Ainsi, l'enjoliveur ne comporte pas de matière plastique sur sa face visible après moulage, c'est-à-dire sur sa face orientée vers le fond 53 pendant le moulage.

L'emplacement du (ou des) aimant(s) ainsi que le nombre d'aimants nécessaires dépendent de la forme et des dimensions de la (ou des) pièce(s) rapportée(s) : plus la pièce rapportée est massive et grande et plus il faut d'aimant(s). Pour les pièces de grandes dimensions, il peut être préférable de disposer un grand nombre d'aimants, chacun de petite dimension plutôt qu'un petit nombre d'aimants, chacun de grande dimension afin de pouvoir disposer d'une certaine souplesse dans la gestion de la force globale d'attraction en activant éventuellement qu'une partie seulement des aimants lors du moulage du cordon profilé.

Il est également possible de mettre en oeuvre l'invention pour le moulage d'un vitrage en matière plastique, dans lequel une matière plastique constitutive dudit vitrage en matière plastique est introduite dans une cavité de moulage dans laquelle au moins une pièce rapportée, telle qu'un enjoliveur, a préalablement été positionnée.

Dans ce cas, la pièce rapportée se trouve alors directement surmoulée à la surface dudit vitrage.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Procédé de moulage d'un cordon profilé (3) en particulier à la périphérie d'un vitrage (4) ou de moulage d'un vitrage en matière plastique, dans lequel une matière plastique constitutive dudit cordon profilé (3) ou respectivement dudit vitrage en matière plastique est introduite dans une cavité de moulage dans laquelle au moins une pièce rapportée (2) ferromagnétique, telle qu'un enjoliveur, a préalablement été positionnée, **caractérisé en ce que** ladite pièce rapportée (2) est maintenue dans ladite cavité de moulage (5) pendant l'introduction de ladite matière plastique par au moins un aimant (40, 40') qui est mobile entre deux positions, une position active A dans laquelle il exerce une force d'attraction sur ladite pièce rapportée (2) à travers la surface interne de la cavité de moulage et une position inactive I dans laquelle il n'exerce pas de force d'attraction sur ladite pièce rapportée (2).

2. Procédé de moulage selon la revendication 1, **caractérisé en ce que** ledit aimant (40, 40') est mobile entre les deux positions active A et inactive I par un mouvement de rotation R et/ou de translation T.

3. Procédé de moulage selon la revendication 1 ou la revendication 2, **caractérisé en ce que** plusieurs aimants (40, 40') sont mobiles ensembles selon un mouvement unique.

4. Procédé de moulage selon la revendication 3, **caractérisé en ce que** ledit ensemble d'aimants (40, 40') est divisé en deux groupes d'aimants de manière à ce que lorsque un groupe est en position inactive I dans laquelle il n'exerce pas de force d'attraction sur ladite pièce rapportée (2) l'autre groupe exerce une force de répulsion sur ladite pièce rapportée (2).

5. Procédé de moulage selon la revendication 4, **caractérisé en ce que** ladite pièce rapportée (2) est positionnée dans la cavité de moulage (5), à cheval sur une barrette (54) paramagnétique.

6. Procédé de moulage selon quelconque des revendications 1 à 5, **caractérisé en ce que** ledit aimant (40, 40') est positionné en position active A avant le début de l'injection de la matière plastique constitutive dudit cordon profilé (3) ou respectivement dudit vitrage en matière plastique et ledit aimant (40, 40') est positionné en position inactive I après la fin de l'injection de la matière plastique constitutive dudit cordon profilé (3) ou respectivement dudit vitrage en matière plastique.

7. Procédé de moulage selon quelconque des revendications 1 à 6, **caractérisé en ce que** ledit aimant (40, 40') est positionné en position active A après le positionnement de ladite pièce rapportée dans la cavité de moulage

8. Procédé de moulage selon quelconque des revendications 1 à 7, **caractérisé en ce que** ledit aimant (40, 40') est positionné en position inactive I avant le retrait du vitrage (4) du moule.

9. Dispositif de moulage pour la mise en oeuvre du procédé de moulage selon l'une quelconque des revendications 1 à 8, **caractérisé en ce que** une cavité de moulage (5) comporte en deçà de sa surface interne de moulage au moins un aimant (40, 40') qui est mobile entre deux positions, une position active A dans laquelle il exerce une force d'attraction à travers la surface interne de la cavité de moulage sur ladite pièce rapportée (2) et une position inactive I dans laquelle il n'exerce pas de force d'attraction sur ladite pièce rapportée (2).

10. Dispositif de moulage selon la revendication 9, **caractérisé en ce que** le(s)dit(s) aimant(s) (40, 40') est (ou sont) positionné(s) sur au moins un tiroir (41) mobile en translation T et/ou sur au moins un disque (42) mobile en rotation R.

11. Utilisation d'au moins un aimant (40, 40') mobile pour la mise en oeuvre du procédé de moulage selon l'une quelconque des revendications 1 à 8.

## Patentansprüche

1. Verfahren zum Gießen eines Profilstrangs (3), insbesondere am Umfang einer Verglasung (4) oder zum Gießen einer Kunststoffverglasung, wobei ein Kunststoff, aus dem der Profilstrang (3) bzw. die Kunststoffverglasung besteht, in einen Formhohlraum eingeführt wird, in dem mindestens ein ferromagnetisches Einlegeteil (2), wie eine Zierkappe, zuvor positioniert worden ist, **dadurch gekennzeichnet, dass** das Einlegeteil (2) während des Einführens des Kunststoffs durch mindestens einen Magneten (40, 40'), der zwischen zwei Positionen beweglich ist, einer aktiven Position A, in der er eine Anziehungskraft auf das Einlegeteil (2) über die Innenfläche des Formhohlraums ausübt, und einer inaktiven Position I, in der er keine Anziehungskraft auf das Einlegeteil (2) ausübt, in dem Formhohlraum (5) gehalten wird.

2. Verfahren zum Gießen nach Anspruch 1, **dadurch gekennzeichnet, dass** der Magnet (40, 40') zwischen den beiden Positionen, der aktiven A und der inaktiven I, durch eine Rotationsbewegung R und/oder eine Translationsbewegung T beweglich ist.

3. Verfahren zum Gießen nach Anspruch 1 oder Anspruch 2, **dadurch gekennzeichnet, dass** mehrere Magneten (40, 40') gemeinsam entsprechend einer einzigen Bewegung beweglich sind.

4. Verfahren zum Gießen nach Anspruch 3, **dadurch gekennzeichnet, dass** die Magnetenbaugruppe (40, 40') derart in zwei Gruppen von Magneten gegliedert ist, dass, wenn sich eine Gruppe in der inaktiven Position I befindet, in der sie keine Anziehungskraft auf das Einlegeteil (2) ausübt, die andere Gruppe eine Rückstoßkraft auf das Einlegeteil (2) ausübt.

5. Verfahren zum Gießen nach Anspruch 4, **dadurch gekennzeichnet, dass** das Einlegeteil (2) in dem Formhohlraum (5) auf einem paramagnetischen Stab (54) rittlings positioniert ist.

6. Verfahren zum Gießen nach einem der Ansprüche 1 bis 5, **dadurch gekennzeichnet, dass** der Magnet (40, 40') vor dem Beginn des Einspritzens des Kunststoffs, aus dem der Profilstrang (3) bzw. die Kunststoffverglasung besteht, in der aktiven Position A positioniert ist, und der Magnet (40, 40') nach dem Ende des Einspritzens des Kunststoffs, aus dem der Profilstrang (3) bzw. die Kunststoffverglasung besteht, in der inaktiven Position I positioniert ist.

7. Verfahren zum Gießen nach einem der Ansprüche 1 bis 6, **dadurch gekennzeichnet, dass** der Magnet (40, 40') nach der Positionierung des Einlegeteils in dem Formhohlraum in der aktiven Position A positioniert ist.

8. Verfahren zum Gießen nach einem der Ansprüche 1 bis 7, **dadurch gekennzeichnet, dass** der Magnet (40, 40') vor dem Herauslösen der Verglasung (4) aus der Form in der inaktiven Position I positioniert ist.

9. Vorrichtung zum Gießen zum Durchführen des Gießverfahrens nach einem der Ansprüche 1 bis 8, **dadurch gekennzeichnet, dass** ein Formhohlraum (5) unterhalb seiner Forminnenfläche mindestens einen Magneten (40, 40') umfasst, der zwischen zwei Positionen beweglich ist, einer aktiven Position A, in der er über die Innenfläche des Formhohlraums eine Anziehungskraft auf das Einlegeteil (2) ausübt, und einer inaktiven Position I, in der er keine Anziehungskraft auf das Einlegeteil (2) ausübt.

10. Vorrichtung zum Gießen nach Anspruch 9, **dadurch gekennzeichnet, dass** der/die Magnet(en) (40, 40') auf mindestens einem in Translation T beweglichen Schieber (41) und/oder auf mindestens einer in Rotation R beweglichen Schreibe (42) positioniert ist/sind.

11. Verwendung mindestens eines beweglichen Magneten (40, 40') zum Durchführen des Gießverfahrens nach einem der Ansprüche 1 bis 8.

## Claims

1. A process for molding a beading (3) in particular on the periphery of a window (4) or for molding a plastic window, in which a constituent plastic of said beading (3) or of said plastic window respectively is introduced into a molding cavity in which at least one ferromagnetic insert (2), such as a trim, has been placed beforehand, **characterized in that** said insert (2) is held in position in said molding cavity (5) during the introduction of said plastic by at least one magnet (40, 40') which can move between two positions, an active position A in which it exerts an attractive force on said insert (2) across the internal surface of the molding cavity and an inactive position I in which it exerts no attractive force on said insert (2).

2. The molding process as claimed in claim 1, **characterized in that** said magnet (40, 40') can move between the two positions, namely the active position A and the inactive position I, by a rotational movement R and/or a translational movement T.

3. The molding process as claimed in claim 1 or claim 2, **characterized in that** several magnets (40, 40') can move together in a single movement.

4. The molding process as claimed in claim 3, **characterized in that** said set of magnets (40, 40') is divided into two groups of magnets so that when one group is in the inactive position I, in which it exerts no attractive force on said insert (2), the other group exerts a repulsive force on said insert (2).

5. The molding process as claimed in claim 4, **characterized in that** said insert (2) is placed in the molding cavity (5) astride a paramagnetic rod (54).

6. The molding process as claimed in any one of claims 1 to 5, **characterized in that** said magnet (40, 40') is placed in the active position A before the start of injection of the constituent plastic of said beading (3) or of said plastic window respectively and said magnet (40, 40') is placed in the inactive position I after the end of injection of the constituent plastic of said beading (3) or of said plastic window respectively.

7. The molding process as claimed in any one of claims 1 to 6, **characterized in that** said magnet (40, 40') is placed in the active position A after said insert has been placed in the molding cavity.

8. The molding process as claimed in any one of claims 1 to 7, **characterized in that** said magnet (40, 40') is placed in the inactive position I before the window (4) is removed from the mold.

9. A molding device for implementing the molding process as claimed in any one of claims 1 to 8, **characterized in that** a molding cavity (5) includes, in front of its internal molding surface, at least one magnet (40, 40') which can move between two positions, an active position A in which it exerts an attractive force across the internal surface of the molding cavity on said insert (2) and an inactive position I in which it exerts no attractive force on said insert (2).

10. The molding device as claimed in claim 9, **characterized in that** said magnet(s) (40, 40') is (are) placed on at least one slide (41) that can more in a translational movement T and/or on at least one disk (42) that can move in a rotational movement R.

11. The use of at least one movable magnet (40, 40') for implementing the molding process as claimed in any one of claims 1 to 8.
